# FASCICULE DE BREVET EUROPEEN

(11) **EP 0 762 431 B1**
(45) Date de publication et mention de la délivrance du brevet: **07.07.1999**
(21) Numéro de dépôt: 96401778.4
(22) Date de dépôt: 13.08.1996
(51) Int. Cl.: G21C 9/016

(54) **Dispositif et procédé de récupération et de refroidissement du coeur en fusion d'un réacteur nucléaire**
Einrichtung und Verfahren zum Auffangen und Kühlen der Kernschmelze eines Kernreaktors
Installation and method for collecting and coding nuclear reactor core meltdown products

(30) Priorité: 11.09.1995 FR 9510625
(43) Date de publication de la demande: 12.03.1997
(73) Titulaire: FRAMATOME, 92400 Courbevoie (FR)
(72) Inventeur: Bonhomme, Nicolas, 95300 Pontoise (FR)
(74) Mandataire: Bouget, Lucien

(56) Documents cités:
- EP-A- 0 129 933
- EP-A- 0 533 529
- WO-A-95/09425
- DE-A- 4 307 543
- PATENT ABSTRACTS OF JAPAN vol. 017, no. 122 (P-1501) 15 Mars 1993 & JP-A-04 305 192 (MITSUBISHI HEAVY IND LTD) 28 Octobre 1992

## Description

L'invention concerne un dispositif de récupération et de refroidissement du coeur en fusion d'un réacteur nucléaire et en particulier d'un réacteur nucléaire refroidi par de l'eau sous pression.

Les réacteurs nucléaires à eau sous pression comportent une cuve de forme générale cylindrique renfermant le coeur du réacteur, disposée avec son axe vertical dans un puits de cuve cylindrique ayant un fond inférieur situé à l'aplomb de la cuve. Le coeur du réacteur nucléaire est refroidi par de l'eau sous pression circulant dans le circuit primaire du réacteur et à l'intérieur de la cuve en contact avec les assemblages de combustible.

Dans le cas de certains accidents survenant dans le réacteur nucléaire et se traduisant par une perte de la fonction de refroidissement du coeur, on doit envisager, compte tenu des conséquences très graves qui en résulteraient, bien que la probabilité d'un tel événement soit extrêmement faible et pratiquement nulle, le cas où les circuits d'injection d'eau de secours du réacteur ne pourraient être mis en fonctionnement. Il peut alors se produire une séquence accidentelle conduisant à la fusion du coeur en l'absence d'eau de refroidissement, ce qui peut entraîner une destruction par percée du fond de la cuve et l'écoulement de la masse du coeur en fusion et des matériaux entourant le coeur, dans le puits en béton contenant la cuve du réacteur. Le contact de la masse en fusion du combustible et des matériaux entourant le combustible, appelée corium, dont la température peut atteindre 2500 à 2800°C, avec le fond du puits de cuve en béton, en l'absence de refroidissement, peut entraîner la destruction complète du fond du puits. Le corium peut alors s'enfoncer dans le radier dans l'enceinte de confinement du réacteur, détruire ce radier et contaminer les nappes phréatiques présentes dans le sol du site du réacteur nucléaire. La progression du corium à l'intérieur du sol ne peut s'arrêter que lorsque la puissance résiduelle du corium a décru suffisamment.

On a proposé d'utiliser des dispositifs de rétention et de refroidissement du corium disposés en-dessous du fond de la cuve, de manière à éviter le contact du corium avec le fond du puits de cuve en béton, dans le cas d'un perçage du fond de la cuve et d'une chute du corium à travers le fond.

De manière à assurer la solidification et le refroidissement du corium, les dispositifs de rétention ou de récupération du corium disposés en-dessous de la cuve peuvent comporter des moyens de refroidissement par circulation d'eau.

Par exemple, dans le EP-A-0 533 529 correspondant au FR-A-2681718, on a décrit un dispositif de refroidissement du corium et de protection de la structure du réacteur nucléaire qui est constitué par une sole métallique recouvrant le fond du puits de cuve et qui comporte des canaux de refroidissement reliés à un circuit d'alimentation en eau des canaux et d'évacuation du fluide de refroidissement ayant circulé dans les canaux. Un tel dispositif présente une très grande efficacité, dans la mesure où il est possible de refroidir la sole métallique sur laquelle on récupère le corium, de manière intense, dès que le corium entre en contact avec la sole métallique de récupération.

En outre, il est souhaitable que ce refroidissement intense soit obtenu sans utiliser de source d'énergie extérieure au circuit de refroidissement, au moins dans les phases initiales du refroidissement, à la suite de la chute du corium.

Enfin, il est également souhaitable d'assurer la mise en fonctionnement du dispositif de refroidissement, de manière automatique, aussitôt après la chute du corium, sans avoir recours à des moyens de détection de la fusion du coeur et du perçage du fond de la cuve. En effet, on ne peut obtenir des conditions de fonctionnement du dispositif de refroidissement qui soient parfaitement sûres que dans la mesure où l'on évite de recourir à une source d'énergie extérieure telle qu'une alimentation électrique, dans la mesure où la source d'énergie peut devenir indisponible lors d'un accident majeur sur le réacteur nucléaire. De même, il est nécessaire d'assurer le démarrage du dispositif de refroidissement sans recourir à des détecteurs qui peuvent se trouver détruits lors d'un accident sur le réacteur nucléaire, pour assurer dans tous les cas le refroidissement du corium aussitôt après le perçage de la cuve et la chute du corium sur le dispositif récupérateur placé généralement en-dessous de la cuve et au-dessus du fond du puits de cuve.

Le but de l'invention est donc de proposer un dispositif de récupération et de refroidissement du coeur en fusion d'un réacteur nucléaire comportant un moyen récupérateur du coeur en fusion, comprenant des moyens de refroidissement du coeur en fusion, par circulation d'eau et un circuit d'alimentation en eau des moyens de refroidissement du récupérateur et d'évacuation d'un fluide formé à partir de l'eau de refroidissement ayant circulé dans les moyens de refroidissement, le circuit d'alimentation en eau des moyens de refroidissement du récupérateur pouvant fonctionner en l'absence de toute source d'énergie extérieure et pouvant être mis en fonctionnement sans moyen de détection de la fusion du coeur ou du perçage du fond de la cuve par la masse du coeur en fusion.

Dans ce but, le circuit d'alimentation en eau des moyens de refroidissement du récupérateur comporte :
- un réservoir de stockage d'eau,
- un réservoir de récupération du fluide évacué des moyens de refroidissement du récupérateur, comprenant des moyens de séparation de vapeur et d'eau contenues dans le fluide et une conduite d'évacuation du fluide dans le réservoir de stockage, et
- un éjecteur de vapeur ayant une entrée de vapeur reliée au réservoir de récupération, une entrée d'eau reliée à une canalisation d'aspiration d'eau dans le réservoir de stockage et une sortie d'eau reliée par une canalisation d'alimentation au moyen de refroidissement du récupérateur.

L'invention concerne également un procédé de récupération et de refroidissement du coeur en fusion d'un réacteur nucléaire comportant un récupérateur placé en-dessous du niveau du fond inférieur de la cuve du réacteur nucléaire contenant le coeur, des moyens de refroidissement du récupérateur par circulation d'eau et un circuit d'alimentation en eau des moyens de refroidissement du récupérateur et d'évacuation d'un fluide formé à partir de l'eau de refroidissement ayant circulé dans les moyens de refroidissement, caractérisé par le fait qu'on recueille le coeur en fusion dans le récupérateur, qu'on sépare du fluide de refroidissement ayant circulé dans les moyens de refroidissement du récupérateur qui est constitué d'eau et de vapeur, une partie au moins de la vapeur, on envoie la vapeur d'eau dans un éjecteur de vapeur, de manière à créer un effet d'aspiration dans l'éjecteur de vapeur, on prélève de l'eau dans un réservoir de stockage et on injecte l'eau prélevée dans le réservoir de stockage, dans les moyens de refroidissement du récupérateur, par l'intermédiaire de l'éjecteur de vapeur.

Afin de bien faire comprendre l'invention, on va maintenant décrire, à titre d'exemple non limitatif, en se référant aux figures jointes en annexe, un dispositif de récupération et de refroidissement suivant l'invention et son utilisation pour le refroidissement du corium d'un réacteur nucléaire dont le coeur est entré en fusion.

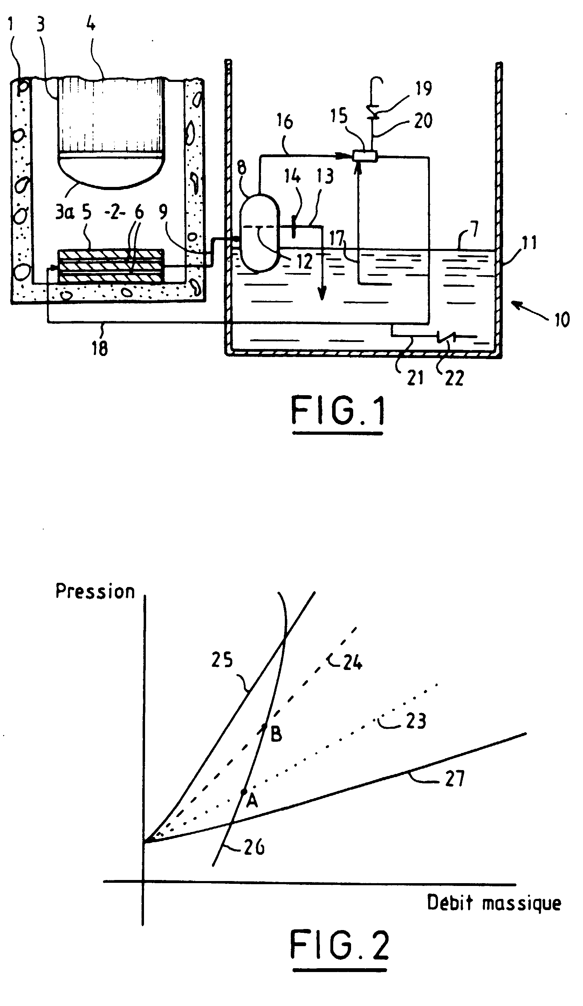

La figure 1 est une vue schématique en élévation d'un dispositif de récupération et de refroidissement du coeur en fusion d'un réacteur nucléaire à eau sous pression. La figure 2 est un diagramme de fonctionnement du circuit d'alimentation en eau du dispositif de récupération et de refroidissement suivant l'invention.

Sur la figure 1, on voit une partie de la structure en béton 1 d'un réacteur nucléaire délimitant un puits de cuve 2 dans lequel est disposée la cuve 3 du réacteur nucléaire renfermant le coeur 4 constitué par des assemblages de combustible placés à l'intérieur d'équipements internes à la cuve du réacteur nucléaire assurant leur maintien et leur support.

Le coeur 4 du réacteur nucléaire est refroidi, pendant le fonctionnement du réacteur, par de l'eau sous pression circulant dans le circuit primaire du réacteur et à l'intérieur de la cuve 3.

Dans le cas d'un accident se traduisant par une interruption de la circulation d'eau primaire dans la cuve du réacteur au contact des assemblages combustibles, le coeur 4 peut être refroidi par des systèmes de refroidissement de secours généralement redondants.

Dans le cas tout-à-fait improbable d'une défaillance de l'ensemble des circuits de refroidissement de secours, le coeur 4 produit de la chaleur qui ne peut plus être évacuée et donc est susceptible de fondre et d'entraîner la fusion des équipements internes du réacteur nucléaire. La masse en fusion du coeur et des équipements internes constituant le corium peut alors venir en contact avec le fond 3a de la cuve 3 et entraîner un perçage du fond de la cuve. Le corium peut alors se répandre sur le fond du puits de cuve 2.

Pour éviter le contact du corium avec le fond du puits de cuve, on utilise un dispositif de récupération et de refroidissement du corium qui comporte un moyen de récupération et de rétention 5 du coeur disposé en-dessous du niveau du fond 3a de la cuve.

Le récupérateur 5 qui peut être d'un type quelconque est par exemple constitué par une sole métallique telle que décrite dans le EP-A-0 533 529 recouvrant le fond du puits de cuve, à l'aplomb du fond 3a de la cuve 3.

Le récupérateur de corium 5 comporte des moyens de refroidissement qui peuvent être constitués par exemple par des canaux 6 de circulation d'eau ménagés à l'intérieur de la sole métallique constituant le récupérateur 5.

Le dispositif de récupération et de refroidissement suivant l'invention, représenté sur la figure 1, comporte, en plus du récupérateur 5 muni de moyens de refroidissement 6, un circuit 10 d'alimentation en eau de refroidissement des moyens de refroidissement 6 du récupérateur 5. Le circuit 10 assure également l'évacuation et la récupération du fluide de refroidissement formé à partir de l'eau de refroidissement ayant circulé dans les canaux 6 du récupérateur et ayant assuré le refroidissemement du récupérateur et du corium. Le fluide de refroidissement récupéré est constitué par de l'eau en mélange avec de la vapeur formée par échauffement de l'eau par le corium à très haute température venant en contact avec le récupérateur.

Le circuit 10 d'alimentation en eau et d'évacuation du fluide de refroidissement comporte un réservoir de stockage 11 de grandes dimensions renfermant un volume important d'eau de refroidissement jusqu'au niveau 7 visible sur la figure 1.

Le circuit de récupération et de refroidissement 10 comporte de plus un réservoir 8 de récupération du fluide formé par l'eau ayant circulé dans les canaux de refroidissement 6 du récupérateur 5 et constitué par un mélange d'eau et de vapeur.

Le réservoir de récupération 8 est constitué par une enceinte métallique de forme globalement cylindrique fermée à ses extrémités par des fonds hémisphériques. Le volume intérieur du réservoir de récupération 8 est relié par l'intermédiaire d'une conduite 9 d'évacuation de fluide, à la sortie des canaux de refroidissement 6 du récupérateur 5.

Le réservoir 8 comporte dans sa partie médiane, au-dessus du point de jonction de la conduite d'évacuation 9, un dispositif de séparation 12 permettant de retenir l'eau contenue dans le fluide biphasique eau-vapeur provenant de la sortie des canaux de refroidissement 6 du récupérateur 5. Le dispositif de séparation 12 peut être constitué par exemple, par un séparateur à grille et/ou à chicane.

Une conduite d'évacuation de fluide de refroidissement 13 est reliée à l'enveloppe du réservoir de récupération 8, de manière à déboucher dans le volume intérieur du réservoir de récupération 8, au niveau du dispositif de séparation 12 ou un peu en-dessous. La conduite d'évacuation 13 de fluide biphasique débouche, à son extrémité opposée au réservoir de récupération 8, dans le réservoir de stockage d'eau 11.

Un diaphragme 14 ayant un orifice calibré est intercalé sur la conduite d'évacuation 13.

Le dispositif de récupération et de refroidissement suivant l'invention comporte également un éjecteur de vapeur 15 comportant une entrée de vapeur reliée par l'intermédiaire d'une conduite 16, au réservoir de récupération 8, de manière que la conduite 16 débouche à la partie supérieure du volume interne du réservoir de récupération 8, une entrée d'eau reliée à une conduite d'aspiration 17 plongeant dans l'eau du réservoir de stockage 11 et une ouverture de sortie d'eau reliée par l'intermédiaire d'une canalisation d'alimentation 18 à l'entrée des canaux de refroidissement 6 du récupérateur 5. De plus, une conduite 20 constituant un déversoir de trop-plein et un évent de purgeage du circuit, lors de son remplissage est reliée à la sortie de l'éjecteur de vapeur 15. Sur la conduite 20 est disposé un clapet anti-retour 19. L'extrémité de la conduite 20 à l'opposé de l'éjecteur de vapeur 15 débouche au-dessus du niveau d'eau 7 à l'intérieur du réservoir de stockage 11.

Le circuit d'alimentation et d'évacuation 10 comporte également une tuyauterie de remplissage 21 plongeant dans l'eau du réservoir de stockage 11, sur laquelle est placé un clapet anti-retour 22.

Lorsque le réacteur nucléaire est en fonctionnement normal, le dispositif de refroidissement n'est pas en fonctionnement et la ligne de remplissage 21 assure le remplissage du circuit d'alimentation d'eau 10 et des canaux de refroidissement 6 du récupérateur 5, de manière que le refroidissement du récupérateur et du corium puisse être assuré dès que du corium parvient au contact de la surface du récupérateur 5.

En outre, la ligne 20 permet l'évacuation de tout gaz ou vapeur parvenant à l'éjecteur de vapeur 15.

Dans le cas d'un accident se traduisant par une fusion du coeur et un perçage de la cuve, le corium qui se déverse sur le récupérateur 5 entraîne un échauffement de l'eau contenue dans les canaux de refroidissement 6 du récupérateur. L'eau échauffée dans les canaux de refroidissement du récupérateur 5 subit une expansion thermique et s'écoule par la ligne d'évacuation 9 dans le réservoir 8. Le remplissage de la canalisation d'alimentation 18 des canaux de refroidissement du récupérateur continue à être assuré par la conduite de remplissage 21. L'eau du réservoir de récupération 8 est évacuée par la ligne de décharge 13 à l'intérieur du réservoir de stockage 11.

Très rapidement, l'échauffement très intense du récupérateur 5 par le corium entraîne une vaporisation d'une partie de l'eau qui circule dans les canaux de refroidissement 6. De la vapeur parvient à l'intérieur du réservoir de récupération 8 en mélange avec de l'eau de refroidissement. La vapeur s'élève à l'intérieur du réservoir de récupération 8. Le dispositif de séparation 12 assure la séparation de l'eau et de la vapeur du mélange biphasique de sorte que la partie supérieure du réservoir de récupération 8 reçoit de la vapeur qui est évacuée par la conduite 16 vers l'entrée de vapeur de l'éjecteur 15. La vapeur traverse l'éjecteur puis est évacuée au niveau de la sortie de l'éjecteur, par la conduite d'évacuation et d'évent 20.

L'éjecteur de vapeur 15 est du type automatique à auto-démarrage. Lorsque le débit de vapeur évacué par la ligne d'évent est suffisant, le démarrage de l'éjecteur à vapeur se produit. Le débit de vapeur est alors suffisant pour assurer l'aspiration d'eau dans le réservoir de stockage 11 par la ligne d'aspiration 17 et l'entraînement de l'eau aspirée dans le réservoir 11 dans la canalisation d'alimentation 18 reliée à l'entrée des canaux de refroidissement du récupérateur 5. Le clapet anti-retour 19 se referme et le circuit d'alimentation 10 est alors amorcé pour fonctionner de manière continue. L'eau aspirée dans le réservoir de stockage 11 puis entraînée dans la canalisation d'alimentation 18 circule dans les canaux de refroidissement 6 du récupérateur 5 où elle s'échauffe et se vaporise partiellement.

Le mélange biphasique parvient par la conduite d'évacuation 9 au réservoir de récupération 8. Une partie de la vapeur séparée du mélange biphasique parvient dans la partie supérieure du réservoir de récupération 8 et, par l'intermédiaire de la conduite 16, dans l'éjecteur de vapeur 15, cette vapeur constituant l'élément moteur de l'éjecteur de vapeur. Le mélange biphasique traversant le diaphragme à orifices calibrés 14 est renvoyé dans la masse d'eau remplissant le réservoir de stockage 11 jusqu'au niveau 7. La masse d'eau remplissant le réservoir 11 assure le refroidissement du mélange biphasique. L'éjecteur de vapeur 15 assure l'aspiration d'eau de refroidissement dans le réservoir de stockage 11 par la conduite 17 et l'entraînement de l'eau de refroidissement dans la canalisation d'alimentation 18. Le clapet 22 de la conduite de remplissage 21 est fermé de manière que la canalisation d'alimentation soit isolée du réservoir de stockage 11.

Sur la figure 2, on a représenté la caractéristique de fonctionnement 26 de l'éjecteur de vapeur 15. Lorsque la pression de la vapeur augmente, le débit massique d'eau injectée par l'éjecteur de vapeur dans la canalisation d'alimentation 18 augmente lentement jusqu'à une valeur maximale et diminue ensuite du fait de la cavitation du liquide à l'entrée de l'éjecteur de vapeur.

Sur la figure 2, on a également représenté les caractéristiques de fonctionnement 27, 23, 24 et 25 de la ligne de décharge 13 reliée au réservoir de récupération 8, correspondant à une évacuation d'un fluide de composition variable. La courbe 27 correspond à l'évacuation d'eau ne renfermant pas de vapeur, la courbe 25 correspond à l'évacuation de vapeur et les courbes 23 et 24 correspondent à des mélanges biphasiques eau-vapeur en proportions différentes. La courbe 23 correspond à l'évacuation d'un mélange biphasique renfermant plus d'eau et moins de vapeur que le mélange biphasique dont l'évacuation est représentée par la courbe 24.

A l'intersection de la caractéristique 26 de fonctionnement de l'éjecteur de vapeur et des caractéristiques 23 et 24 de la ligne de décharge, on détermine des points de fonctionnement A et B pour le fonctionnement avec évacuation du premier et du second mélange biphasique, respectivement. Les points A et B correspondent à des points de fonctionnement possible en régime stationnaire, le point B correspondant à la charge thermique la plus élevée.

Le fonctionnement en régime permanent est très stable, du fait que l'augmentation de la pression tend à augmenter le débit de décharge et donc à diminuer le niveau dans le réservoir de récupération. Le débit de l'eau de refroidissement du récupérateur augmente, ce qui conduit à une diminution de la pression et à un retour vers le point de fonctionnement en régime stationnaire initial.

Les variations de la charge thermique conduisent à un ajustement du point de fonctionnement de l'éjecteur de gaz sur la courbe 26.

Dans le cas où l'apport de chaleur, au moment de la chute du corium, ne serait pas suffisant pour mettre l'éjecteur de vapeur en service, il se produirait malgré tout un refroidissement par convection naturelle et décharge par l'orifice calibré de la ligne de décharge. Cette circulation assurerait un refroidissement limité. Ce type de fonctionnement est cependant très hypothétique, du fait que l'apport de chaleur en cas de perçage de la cuve conduit de manière presque certaine à un fonctionnement avec l'éjecteur de vapeur en service, c'est-à-dire à un fonctionnement avec une circulation forcée de l'eau de refroidissement et donc avec un refroidissement important du récupérateur 5.

Le dispositif de récupération de corium suivant l'invention présente donc l'avantage de pouvoir être refroidi par circulation d'eau, sans apport d'énergie extérieure et sans avoir à commander la mise en fonctionnement des moyens de refroidissement en cas de chute du corium sur le récupérateur de corium. Le dispositif peut fonctionner de manière extrêmement efficace jusqu'à la solidification du corium sur le récupérateur. En outre, le fonctionnement des moyens de refroidissement du récupérateur est auto-régulé.

Il est généralement préférable de placer le réservoir de stockage d'eau, le réservoir de récupération de fluide de refroidissement et l'éjecteur de vapeur à l'extérieur du bâtiment du réacteur nucléaire, mais il serait également possible de placer ces moyens à l'intérieur du bâtiment de sécurité d'un réacteur nucléaire.

Il est possible de prévoir un réservoir de stockage ayant une très grande capacité et une tuyauterie de vidange du réservoir de récupération équipée d'un dispositif ayant une perte de charge d'un type quelconque. Le dispositif assurant une perte de charge sur la conduite d'évacuation de fluide de refroidissement du réservoir de récupération permet d'adapter le fonctionnement du circuit d'évacuation de fluide de refroidissement et d'alimentation du récupérateur en eau de refroidissement, à différents types d'accident pouvant se produire dans le réacteur nucléaire et entraînant une fusion au moins partielle du coeur.

L'invention ne se limite pas au mode de réalisation qui a été décrit.

C'est ainsi que le récupérateur peut être réalisé sous une forme différente d'une sole métallique comportant des canaux de refroidissement. Le récupérateur peut être placé directement sous le fond de cuve, mais il peut également être placé dans un local situé à côté du puits de cuve ; dans ce cas, un dispositif d'entraînement dirige le corium vers le récupérateur. Le réservoir de stockage, le réservoir de récupération et l'éjecteur de vapeur peuvent être réalisés sous toute forme désirable, de manière à présenter les caractéristiques voulues pour remédier à un fonctionnement accidentel quelconque du réacteur avec fusion du coeur.

Il en est de même de la ligne d'échappement du réservoir de récupération comportant un moyen introduisant une perte de charge sur la sortie du fluide de refroidissement.

L'invention s'applique à tout réacteur nucléaire comportant une cuve renfermant le coeur du réacteur dont le fond, susceptible d'être percé par le coeur en fusion, se trouve au-dessus d'une dalle ou d'un fond de puits de cuve dont il est nécessaire d'assurer la protection.

## Revendications

1. Dispositif de récupération et de refroidissement du coeur en fusion d'un réacteur nucléaire comportant un récupérateur (5) du coeur (4) en fusion, comprenant des moyens de refroidissement (6) du coeur en fusion, par circulation d'eau et un circuit (10) d'alimentation en eau des moyens de refroidissement (6) du récupérateur (5) et d'évacuation d'un fluide formé à partir de l'eau de refroidissement ayant circulé dans les moyens de refroidissement (6), caractérisé par le fait qu'il comporte :
- un réservoir de stockage d'eau (11),
- un réservoir de récupération (8) du fluide évacué des moyens de refroidissement (6) du récupérateur (5), comprenant des moyens (12) de séparation de vapeur et d'eau contenues dans le fluide et une conduite (13) d'évacuation du fluide dans le réservoir de stockage (11), et
- un éjecteur de vapeur (15) ayant une entrée de vapeur reliée au réservoir de récupération (8), une entrée d'eau reliée à une canalisation (17) d'aspiration d'eau dans le réservoir de stockage (11) et une sortie d'eau reliée par une canalisation d'alimentation (18) aux moyens de refroidissement (6) du récupérateur (5).

2. Dispositif suivant la revendication 1, caractérisé par le fait qu'un dispositif (14) de perte de charge est disposé sur la conduite (13) d'évacuation de fluide dans le réservoir de stockage (11).

3. Dispositif suivant la revendication 2, caractérisé par le fait que le dispositif de perte de charge (14) est constitué par un diaphragme à orifice calibré.

4. Dispositif suivant l'une quelconque des revendications 1 à 3, caractérisé par le fait que le circuit d'alimentation et d'évacuation (10) comporte de plus une conduite de trop-plein et d'évent (20) reliée à une partie de sortie de l'éjecteur de vapeur (15).

5. Dispositif suivant l'une quelconque des revendications 1 à 4, caractérisé par le fait que la canalisation d'alimentation (18) du moyen de refroidissement (6) du récupérateur (5) est reliée à une tuyauterie (21) d'alimentation en eau communiquant avec le réservoir de stockage d'eau (11) sur laquelle est placé un clapet anti-retour (22).

6. Dispositif suivant la revendication 4, caractérisé par le fait qu'un clapet anti-retour (19) est placé sur la conduite de trop-plein et d'évent (20).

7. Dispositif suivant l'une quelconque des revendications 1 à 6, caractérisé par le fait que le récupérateur de corium (5) est constitué par une sole métallique dans laquelle sont prévus des canaux de refroidissement (6) par circulation d'eau constituant le moyen de refroidissement du récupérateur (5).

8. Procédé de récupération et de refroidissement du coeur (4) en fusion d'un réacteur nucléaire comportant un récupérateur (5) placé en-dessous du niveau du fond inférieur (3a) de la cuve (3) du réacteur nucléaire contenant le coeur (4), des moyens de refroidissement (6) du récupérateur (5) par circulation d'eau et un circuit d'alimentation (10) en eau des moyens de refroidissement (6) du récupérateur (5) et d'évacuation d'un fluide formé à partir de l'eau de refroidissement ayant circulé dans les moyens de refroidissement (6), caractérisé par le fait qu'on recueille le coeur (4) en fusion dans le récupérateur (5), qu'on sépare du fluide de refroidissement ayant circulé dans les moyens de refroidissement (6) du récupérateur (5) et qui est constitué d'eau et de vapeur d'eau, une partie au moins de la vapeur, qu'on envoie la partie restante du fluide de refroidissement dans un réservoir de stockage d'eau (11) du circuit d'alimentation (10), qu'on envoie la vapeur d'eau dans un éjecteur de vapeur (15), de manière à créer une effet d'aspiration dans l'éjecteur de vapeur (15), qu'on prélève de l'eau dans le réservoir de stockage (11) et qu'on injecte l'eau prélevée dans le réservoir de stockage (11), dans les moyens de refroidissement (6) du récupérateur, par l'intermédiaire de l'éjecteur de vapeur (15).

9. Procédé suivant la revendication 8, caractérisé par le fait que, préalablement au recueil du coeur (4) en fusion dans le récupérateur (5), on assure un remplissage complet du circuit d'alimentation par apport d'eau à partir du réservoir de stockage (11) dans le circuit d'alimentation et évacuation de gaz ou vapeur contenu dans le circuit d'alimentation, par une conduite (20) d'évacuation et d'évent reliée au circuit d'alimentation (10).

10. Procédé suivant l'une quelconque des revendications 8 et 9, caractérisé par le fait qu'on crée une perte de charge sur l'évacuation de la partie restante du fluide de refroidissement dans le réservoir de stockage d'eau (11).

## Patentansprüche

1. Vorrichtung zum Auffangen und Kühlen der Kernschmelze eines Kernreaktors, mit einer Auffangeinrichtung (5) des Kerns (4) beim Schmelzen, mit Kühleinrichtungen (6) der Kernschmelze durch Zirkulation von Wasser und einem Wasserzuführkreislauf der Kühleinrichtungen (6) der Auffangeinrichtung (5) und des Ausbringens eines Fluides gebildet ausgehend von dem Kühlwasser, das durch die Kühleinrichtungen (6) zirkuliert ist, dadurch gekennzeichnet, daß sie aufweist:
- einen Wasserspeichertank (11),
- einen Auffangspeicher (8) des aus den Kühleinrichtungen (6) der Auffangeinrichtung (5) ausgebrachten Fluides, mit Trenneinrichtungen (12) von Dampf und Wasser, enthalten in dem Fluid, und einer Ausbringleitung (13) des Fluides in den Speichertank (11), und
- einen Dampfauswerfer (15), der einen Dampfeintritt hat, der mit dem Auffangspeicher (8) verbunden ist, einen Wassereintritt hat, der mit einer Absaugleitung (17) des Wassers in dem Speichertank (11) verbunden ist, und einen Wasseraustritt hat, der durch einen Zuführkanal (18) mit den Kühleinrichtungen (6) der Auffangeinrichtung (5) verbunden ist.

2. Vorrichtung nach Anspruch 1, dadurch gekennzeichnet, daß eine Vorrichtung (14) des Druckverlustes an der Fluidausbringleitung (13) in dem Speichertank (11) angeordnet ist.

3. Vorrichtung nach Anspruch 2, dadurch gekennzeichnet, daß die Druckverlustvorrichtung (14) durch eine Membran mit kalibrierter Öffnung gebildet ist.

4. Vorrichtung nach einem der Ansprüche 1 bis 3, dadurch gekennzeichnet, daß der Zuführ- und Ausbringkreislauf (10) weiterhin eine Überlaufleitung (20) aufweist, die mit einem Austrittsabschnitt des Dampfauswerfers (15) verbunden ist.

5. Vorrichtung nach einem der Ansprüche 1 bis 4, dadurch gekennzeichnet, daß die Zuführleitung (18) der Kühleinrichtung (6) der Auffangeinrichtung (5) mit einer Wasserzuführrohrleitung (21) verbunden ist, die mit dem Wasserspeichertank (11) in Verbindung steht, an der ein Rückschlagventil bzw. eine Rückschlagklappe (22) angeordnet ist.

6. Vorrichtung nach Anspruch 4, dadurch gekennzeichnet, daß ein Rückschlagventil (19) an der Überlaufleitung (20) angeordnet ist.

7. Vorrichtung nach einem der Ansprüche 1 bis 6, dadurch gekennzeichnet, daß die Coriumauffangeinrichtung (5) durch eine metallische Sohle gebildet ist, in der Kühlkanäle (6) durch Wasserzirkulation vorgesehen sind, die die Kühleinrichtung der Auffangeinrichtung (5) bilden.

8. Verfahren zum Auffangen und Kühlen des Kerns (4) in Schmelze eines Kernreaktors, mit einer Auffangeinrichtung (5), die unterhalb des Niveaus des unteren Bodens (3a) des Behälters (3) des Kernreaktors angeordnet ist, der den Kern (4) enthält, Kühleinrichtungen (6) der Auffangeinrichtung (5) durch Wasserzirkulation und mit einem Zuführkreislauf (10) an Wasser zu den Kühleinrichtungen (6) der Auffangeinrichtung (5) und des Ausbringens eines Fluides, gebildet ausgehend vom Kühlwasser, das in den Kühleinrichtungen (6) zirkuliert ist, dadurch gekennzeichnet, daß man den Kern (4) in Schmelze in der Auffangeinrichtung (5) aufnimmt, daß das Kühlfluid, das in den Kühleinrichtungen (6) zirkuliert ist von der Auffangeinrichtung (5) trennt und das aus Wasser und aus Wasserdampf gebildet ist, wenigstens ein Teil des Dampfes, daß man den verbleibenden Teil des Kühlfluides in ein Wasserspeichertank (11) des Zuführkreislaufs (10) leitet, daß man den Wasserdampf in einen Dampfauswerfer (15) leitet, derart, daß ein Saugeffekt in dem Dampfauswerfer (15) erzeugt wird, daß man Wasser aus dem Speichertank (11) entnimmt und daß man das dem Speichertank (11) entnommene Wasser in die Kühleinrichtungen (6) der Auffangeinrichtung mittels des Dampfauswerfers (15) einspritzt.

9. Verfahren nach Anspruch 8, dadurch gekennzeichnet, daß vor dem Aufnehmen des Kerns (4) in Schmelze in der Auffangeinrichtung (5) ein komplettes Füllen des Zuführkreislaufes durch Wasserzufuhr ausgehend von dem Speichertank (11) in den Zuführ- und Ausbringkreis von Gas oder Dampf sichergestellt wird, das in dem Zuführkreis enthalten ist, durch eine Überlaufleitung (20), die mit dem Zuführkreis (10) verbunden ist.

10. Verfahren nach Anspruch 8 oder 9, dadurch gekennzeichnet, daß ein Druckverlust auf die Ausbringung des verbleibenden Teils des Kühlfluides in dem Wasserspeichertank (11) erzeugt wird.

## Claims

1. Apparatus for the collection and cooling of the molten core of a nuclear reactor, comprising a collector (5) for the molten core (4), which collector comprises means (6) for cooling the molten core by the circulation of water, and a circuit (10) for the supply of water to the means (6) for cooling the collector (5) and for the discharge of a fluid formed from the cooling water which has circulated in the cooling means (6), characterised in that the apparatus comprises:
- a water storage tank (11),
- a collection tank (8) for the fluid discharged from the means (6) for cooling the collector (5), comprising separation means (12) for vapour and water contained in the fluid and a pipe (13) for discharging the fluid into the storage tank (11), and
- a vapour ejector (15) which has a vapour inlet connected to the collection tank (8), a water inlet connected to a line (17) for drawing water from the storage tank (11) and a water outlet connected by a supply line (18) to the means (6) for cooling the collector (5).

2. Apparatus according to claim 1, characterised in that a pressure drop device (14) is arranged on the pipe (13) for discharging fluid into the storage tank (11).

3. Apparatus according to claim 2, characterised in that the pressure drop device (14) is formed by a diaphragm having a calibrated orifice.

4. Apparatus according to any one of claims 1 to 3, characterised in that the supply and discharge circuit (10) further comprises an overflow and venting pipe (20) connected to an outlet portion of the vapour ejector (15).

5. Apparatus according to any one of claims 1 to 4, characterised in that the supply line (18) of the means (6) for cooling the collector (5) is connected to a water supply pipeline (21) which is connected to the water storage tank (11) and on which is arranged a non-return valve (22).

6. Apparatus according to claim 4, characterised in that a non-return valve (19) is arranged on the overflow and venting pipe (20).

7. Apparatus according to any one of claims 1 to 6, characterised in that the core collector (5) comprises a metal base in which are provided channels (6) for cooling by water circulation which form the means for cooling the collector (5).

8. Method for the collection and cooling of the molten core (4) of a nuclear reactor comprising a collector (5) positioned below the level of the bottom (3a) of the vessel (3) of the nuclear reactor containing the core (4), means (6) for cooling the collector (5) by the circulation of water and a circuit (10) for the supply of water to the means (6) for cooling the collector (5) and for the discharge of a fluid formed from the cooling water which has circulated in the cooling means (6), characterised in that the molten core (4) is collected in the collector (5), at least a portion of the vapour is separated from the cooling fluid which has circulated in the means (6) for cooling the collector (5) and which is composed of water and water vapour, the remaining portion of the cooling fluid is sent into a water storage tank (11) of the supply circuit (10), the water vapour is sent into a vapour ejector (15) in order to create a drawing-in effect in the vapour ejector (15), water is removed from the storage tank (11) and the water removed from the storage tank (11) is injected into the means (6) for cooling the collector by means of the vapour ejector (15).

9. Method according to claim 8, characterised in that, prior to the collection of the molten core (4) in the collector (5), the supply circuit is completely filled by introducing water from the storage tank (11) into the supply circuit and by discharging gas or vapour contained in the supply circuit, by means of a discharge and venting pipe (20) connected to the supply circuit (10).

10. Method according to either claim 8 or claim 9, characterised in that a pressure drop is created on discharge of the remaining portion of the cooling fluid into the water storage tank (11).
